# EUROPÄISCHE PATENTSCHRIFT

(11) **EP 1 504 648 B1**
(45) Veröffentlichungstag und Bekanntmachung des Hinweises auf die Patenterteilung: **23.09.2009**
(21) Anmeldenummer: 04017039.1
(22) Anmeldetag: 20.07.2004
(51) Int. Cl.: A01D 41/12

(54) **Verfahren und Vorrichtung zum Betreiben von Arbeitsmaschinen**
Method and device for operating working machines
Procédé et dispositif pour faire fonctionner un engin de travail

(30) Priorität: 08.08.2003 DE 10336771
(43) Veröffentlichungstag der Anmeldung: 09.02.2005
(73) Patentinhaber: CLAAS Selbstfahrende Erntemaschinen GmbH, 33428 Harsewinkel (DE)
(72) Erfinder: Fitzner, Werner, 48336 Sassenberg (DE)

(56) Entgegenhaltungen:
- US-A- 4 296 409
- US-A- 5 712 782
- US-A- 6 119 442
- US-A- 6 167 337
- US-A1- 2003 216 158

## Beschreibung

Die Erfindung betrifft ein Verfahren und eine Vorrichtung zum Betreiben von Arbeitsmaschinen gemäß den Oberbegriffen der Ansprüche 1 und 16.

Ein Verfahren und eine Vorrichtung mit den Merkmalen der Oberbegriffe der Ansprüche 1 und 16 ist aus der US-A-4 296 409 bekannt.

Aus der EP 0 586 999 ist ein Maschinensteuerungssystem bekannt geworden, welches unter anderem an landwirtschaftlichen Erntemaschinen wie etwa Mähdreschern zur Optimierung der Einstellung bestimmter Betriebsparameter eingesetzt werden kann. Unter Hinzuziehung neuronaler Netzwerksysteme wird die landwirtschaftliche Arbeitsmaschine vor ihrem eigentlichen Arbeitseinsatz trainiert, wobei in dieser Trainingsphase in Abhängigkeit von herrschenden inneren und äußeren Randbedingungen optimierte Betriebsparameter ermittelt werden, die letztlich eine Leistungssteigerung des Mähdreschers im eigentlichen Arbeitsbetrieb bewirken sollen. Damit der Betreiber des Mähdreschers den Optimierungsvorgang verfolgen und gegebenenfalls beeinflussen kann, verfügt der Mähdrescher über eine grafische Anzeigeoberfläche, die den Verlauf verschiedener Parameter der landwirtschaftlichen Arbeitsmaschine anzeigt. Zudem kann der Betreiber des Mähdreschers über dieses Graphikdisplay verschiedene Parameter manuell verändern, wobei das Graphikdisplay zugleich die Auswirkungen auf verschiedene andere Parameter anzeigt, sofern die hierfür erforderlichen Sensoren in die landwirtschaftliche Erntemaschine integriert sind.

Aufgrund der komplexen Zusammenhänge zwischen den Betriebsparametern der Erntemaschine und den verschiedenen Parametern des Erntegutes muss der Betreiber des Mähdreschers bei derartigen Anzeige- und Steuereinheiten über ein erhebliches Spezialwissen verfügen, damit er in möglichst kurzer Zeit eine optimale Einstellung der verschiedenen Betriebsparameter des Mähdreschers erreicht. Aufgrund der hohen Komplexität der Anzeige ist es für den Fachmann mitunter schwierig die Auswirkung einer Parameteränderung sofort zu erkennen. Zudem muss der Betreiber über ein erhebliches Spezialwissen bezüglich der komplexen Zusammenhänge zwischen Betriebsparametern und Erntegutparametern verfügen, da unter Berücksichtigung definierter Ernteguteigenschaften und Erntebedingungen nur die Veränderung ganz bestimmter Betriebsparameter und auch nur innerhalb bestimmter Grenzen eine Verbesserung der Effizienz der landwirtschaftlichen Arbeitsmaschine bewirkt. Fehlt dem Betreiber dieses Spezialwissen, kann die Optimierung trotz rechnerunterstützter Maschinensteuerung einen erheblichen Zeitraum in Anspruch nehmen. Dies wirkt sich insbesondere negativ auf die Leistungsfähigkeit der landwirtschaftlichen Arbeitsmaschine aus.

Der Erfindung liegt deshalb die Aufgabe zugrunde, ein System zur Optimierung von Parametereinstellungen an einer Arbeitsmaschine vorzuschlagen, welches die beschriebenen Nachteile des Standes der Technik vermeidet indem der Betreiber der Arbeitsmaschine durch das System effizient zu optimierten Betriebsparametern geführt wird.

Erfindungsgemäß wird die Aufgabe durch ein Verfahren und eine Vorrichtung mit den kennzeichnenden Merkmalen der Ansprüche 1 und 16 gelöst.

Indem der Arbeitsmaschine zur Veränderung wenigstens eines Betriebsparameters eines Arbeitsorgans ein mit einem Regeleditor gekoppelt Regelgenerator zugeordnet ist, in dem mittels des Regeleditors änderbare Einstellregeln für den Betriebsparameter hinterlegt sind wird sichergestellt, dass der eine oder eine Vielzahl von Betriebsparametern auf einfache Weise an sich ändernde Erntegutbedingungen angepasst werden können.

Eine besonders effiziente Methode der Optimierung der Betriebsparameter wird dann erreicht, wenn die in dem Regelgenerator hinterlegten Regeln durch natürlichsprachige Programmschritte definiert sind. Auf diese Weise vereinfacht sich für den Nutzer des Regelgenerators dessen Anwendung zur Optimierung von Betriebsparametern. Ohne spezielles Wissen über die sehr komplexen Zusammenhänge zwischen Betriebsparametern und Ernteguteigenschaften kann der Nutzer auf natürlichsprachige Weise Problemstellungen definieren, die dann mittels der im Regelgenerator hinterlegten Regeln natürlichsprachig beantwortet werden. Damit schafft der Einsatz eines natürlichsprachig arbeitenden Regelgenerators auch für den ungeübten Betreiber einer Arbeitsmaschine eine effiziente Möglichkeit der Betriebsparametereinstellung einer Arbeitsmaschine, da der Betreiber nur das konkrete Problem definieren muss und der Regelgenerator dem Betreiber die zu ändernden Betriebsparameter und den Wertebereich in dem die Betriebsparameter zu ändern sind angibt.

Zur Programmierungsvereinfachung ist in einer vorteilhaften Ausgestaltung der Erfindung die Terminologie der natürlichsprachigen Programmschritte in sprachlichen Elementen hinterlegt. Damit wird sichergestellt, dass gleiche Problemstellungen und gleiche Lösungen bei verschiedenen Anwendungsfällen die gleichen sprachlichen Elemente aufweisen.

Damit der Betreiber des mit dem Regeleditor verknüpften Regelgenerators über keine speziellen Programmierkenntnisse verfügen muss, sind in einer weiteren vorteilhaften Ausgestaltung die sprachlichen Elemente mit in dem Regelgenerator hinterlegten Quellcode verknüpft, sodass das vom Betreiber durch die ausgewählten sprachlichen Elemente definierte Problem Eingangsdaten abgebildet, die unmittelbar zur Generierung einer Regel führen, wobei die in der Regel definierten Ausgangsdaten für den zu optimierenden Betriebsparameter zugleich die Lösung des definierten Problems darstellen.

Die Qualität der Parameteroptimierung wird um so effizienter sein je umfassender der Informationsgehalt der Eingangsdaten ist. Deshalb werden in vorteilhafter Weiterbildung der Erfindung die Eingangsdaten von Betriebsparametern der Arbeitsmaschine selbst, von definierten Problem im Betrieb der Arbeitsmaschine, von inneren und äußeren Randbedingungen sowie von während des Betriebes von der Arbeitsmaschine zu erreichenden Zielen bestimmt.

Ein weiterer wesentlich Vorteil eines natürlichsprachig arbeitenden Regelgenerators liegt darin, dass die generierte Regel natürlichsprachige Ausgangsdaten an den Betreiber der Arbeitsmaschine liefert aus dem dieser unmittelbar ablesen kann, welche Betriebsparameter der Arbeitsmaschine wie zu ändern sind.

Je nach Einsatzfall kann der Regelgenerator so ausgeführt sein, dass die optimierten Sollwerte der Betriebsparameter dem Betreiber der Arbeitsmaschine visuell und/oder akustisch angezeigt werden.

Eine besonders einfache Erstellung neuer Regeln ergibt sich dann, wenn die zu generierenden Regeln als sogenannte "Wenn-Dann" - Regeln strukturiert sind. Auf diese Weise erhält der Nutzer dieser Informationen sehr schnell einen Überblick über die sehr komplexen Zusammenhänge zwischen den Betriebsparametern der Arbeitsmaschine und den Ernteguteigenschaften. Für den Ersteller einer neuen Regel kann es zudem hilfreich sein, wenn die neue Regel in bekannten Signalflussbilddarstellungen oder durch Entscheidungstabellen abgebildet wird.

Ein besonders kostengünstiges Optimierungsverfahren ergibt sich dann, wenn der über einen Regeleditor verfügende Regelgenerator zentral angeordnete ist und über geeignete Datenaustauschsysteme von einer Vielzahl von Arbeitsmaschinen zur Ermittlung optimaler Betriebsparameter der jeweiligen Arbeitsmaschine kontaktierte werden kann. Auf diese Weise muss nicht jede der Arbeitsmaschinen über eine elektronische Datenverarbeitungseinheit zur Integration des Regelgenerators auf der entsprechenden Arbeitsmaschine verfügen.

Damit einmal generierte Regeln auch für Betreiber anderer Maschinen verfügbar sind, sind die generierten Regeln in einer vorteilhaften Weiterbildung der Erfindung unter einer Vielzahl von Arbeitsmaschinen austauschbar. Dies verkürzt den Optimierungsprozess erheblich, da bei einer derartigen Ausführung auf bereits von Regelgeneratoren anderer Arbeitsmaschinen unter gleichen Bedingungen generierte Regeln zurückgegriffen werden kann.

Das Einsatzgebiet des erfindungsgemäßen Verfahrens kann auch dadurch noch gesteigert werden, dass die hinterlegten Regeln nur Einstellratschläge oder Montageanleitungen umfassen. Auf diese Weise kann der Regelgenerator auch bei Umbau- oder Reparaturarbeiten zur Effizienzsteigerung eingesetzt werden.

Um den Betreiber der Arbeitsmaschine weiter zu entlasten, kann in einer vorteilhaften Ausgestaltung der Erfindung vorgesehen sein, dass die ermittelten Betriebsparameter selbständig an dem jeweiligen Arbeitsorgan eingestellt werden.

In vorteilhafter Weiterbildung der Erfindung kann zudem vorgesehen sein, dass der Bediener der landwirtschaftlichen Arbeitsmaschine eine Bewertung der optimierten Betriebsparameter vornimmt, die dann bei der Generierung neuere Regeln oder der Änderung bestehender Regeln berücksichtigt werden kann.

Eine besonders einfache Umsetzung des erfindungsgemäßen Verfahrens in einer Vorrichtung ergibt sich dann, wenn die Arbeitsmaschine zumindest eine Eingabe- und Anzeigeeinheit zur Generierung von Datensätzen aufweist, wobei die Eingabe- und Anzeigeeinheit mit einem einen Regeleditor umfassenden Regelgenerator verbunden ist in dem Regeln für die Einstellung der Betriebsparameter von Arbeitsorganen der Arbeitsmaschine hinterlegt und editierbar sind und der Editier- und Abrufvorgang natürlichsprachig erfolgt.

Besondere Vorteile des erfndungsgemäßen Verfahrens und der zugehörigen Vorrichtung ergeben sich im Bereich landwirtschaftlicher Arbeitsmaschinen, da hier neben den komplexen Einflüssen auf die einstellbaren Betriebsparameter die erhebliche Belastungen des Betreibers der landwirtschaftlichen Arbeitsmaschine während ihres Betriebes hohe Anforderungen an dessen Wissen und Können stellen.

Weitere vorteilhafte Ausgestaltungen sind Gegenstand weiterer Unteransprüche und werden nachfolgend an Hand eines in Zeichnungen dargestellten Ausführungsbeispiels näher erläutert.

Es zeigen
- Figur 1: eine als Mähdrescher ausgeführte erfindungsgemäße Arbeitsmaschine in der Seitenansicht
- Figur 2: eine schematische Ansicht einer Eingabe- und Anzeigeeinheit mit Regeleditor und Regelgenerator
- Figur 3: eine Eingabemaske eines Regeleditors
- Figur 4: eine Eingabemaske der Eingabe- und Anzeigeeinheit nach Figur 2

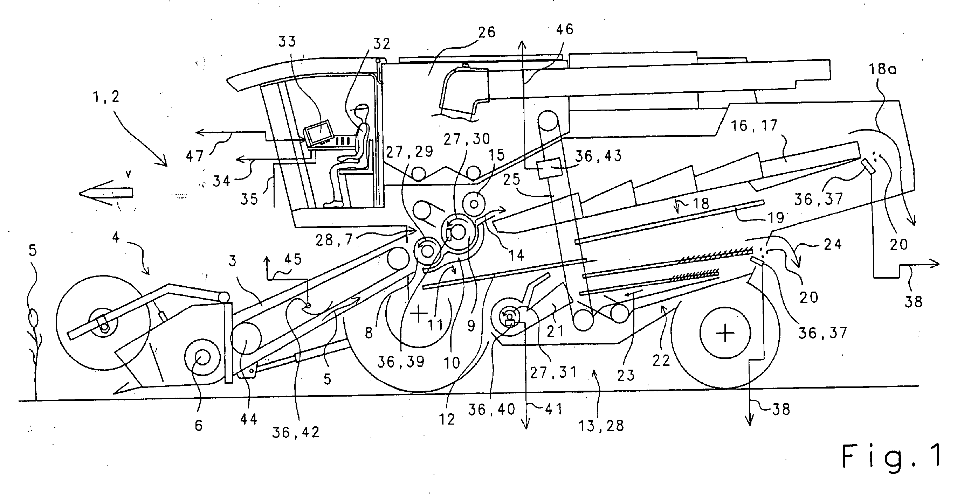

Figur 1 zeigt eine als Mähdrescher 2 ausgeführte Arbeitsmaschine 1, die in ihrem frontseitigen Bereich ein an einem Schrägförderer 3 angeordnetes Schneidwerk 4 aufnimmt, welches das gewachsene Erntegut 5 aberntet und über ein Förderorgan 6 dem Schrägförderer 3 zuführt. Über den Schrägförderer 3 gelangt das Erntegut 5 in an sich bekannter Weise in die Dreschorgane 7, die im dargestellten Ausführungsbeispiel aus einer ersten Dreschtrommel 8 und einer dieser nachgeordneten zweiten Dreschtrommel 9 bestehen. Im Bereich der Dreschorgane 7 wird am Dreschkorb 10 ein erster, im Wesentlichen aus Körner, Kurzstroh und Spreu bestehender erster Gutstrom 11 abgeschieden, der über einen Vorbereitungsboden 12 in die Reinigungseinrichtung 13 gelangt. Ein weiterer Gutstrom 14 wird im rückwärtigen Bereich der Dreschorgane 7 mittels Wendetrommel 15 an eine als Hordenschüttler 17 ausgeführte Trenneinrichtung 16 übergeben. Auf dem Hordenschüttler 17 wird ein weiterer im Wesentlichen aus Körnern, Kurzstroh und Spreu bestehender Gutstrom 18 über einen Rücklaufboden 19 und den Vorbereitungsboden 12 ebenfalls an die Reinigungseinrichtung 13 übergeben. Zudem tritt am Ende des Hordenschüttlers 17 ein im Wesentlichen aus Stroh und zu einem geringen Anteil aus Körnern, dem sogenannten Kornverlust 20, bestehender Gutstrom 18a aus dem Mähdrescher 2 aus. Es liegt im Rahmen der Erfindung, dass die Dreschorgane 7 und der Hordenschüttler 17 auch durch nicht näher dargestellte und an sich bekannte axial umlaufende Dresch- und Trennrotoren oder auch nur der Hordenschüttler 17 durch einen axial umlaufenden Trennrotor ersetzt sein kann.

In der im Wesentlichen aus einem Gebläse 21 und Siebanordnungen 22 bestehenden Reinigungseinrichtung 13 werden die in die Reinigungseinrichtung 13 gelangenden Gutströme 11, 18 in der Weise gereinigt, dass ein im Wesentlichen aus Körnern bestehender Körnerstrom 23 und ein im Wesentlichen aus Kurzstroh, Spreu und einem Anteil Verlustkörnern 20 bestehender weiter Gutstrom 24 gebildet wird. Der Körnerstrom 23 wird schließlich über Förderelevatoren 25 in einem sogenannten Korntank 26 zwischengespeichert.

Damit neben einem hohen Ausdruschgrad der Dreschorgane 7 und einem geringen Anteil an Verlustkörnern 20 dennoch eine möglichst hohe Fahrgeschwindigkeit v des Mähdreschers realisierbar ist, sind verschiedene Betriebsparameter 27 der Arbeitsorgane 28 des Mähdreschers 2 einstellbar. Zur Erläuterung der Erfindung wird an Hand des dargestellten Ausführungsbeispiels nur auf wesentliche Betriebsprameter 27 des Mähdreschers 2 eingegangen. Ein Arbeitsorgan 28 bilden die aus Dreschtrommeln 8, 9 und dem diese wenigstens teilweise umgebenden Dreschkorb 10 bestehenden Dreschorgane 7, deren Betriebsprameter 27 die Drehzahlen 29, 30 der Dreschtrommeln 8, 9 sind. Ein weiteres, wichtiges Arbeitsorgan 28 des Mähdreschers 2 bildet die aus dem Gebläse 21 und der Siebanordnung 22 bestehende Reinigungseinrichtung 13. Hier bildet beispielsweise die Gebläsedrehzahl 31 den zu sensierenden Betriebsparameter 27. In an sich bekannter Weise stehen dem Bediener 32 zur Einstellung der Betriebsparameter 27 entweder unmittelbar an den jeweiligen Arbeitsorganen 28 nicht näher dargestellte Einstellmittel zur Verfügung oder er kann diese Einstellungen über eine Eingabe- und Anzeigeeinheit 33 eingeben, wobei die unmittelbare Einstellung dieser Betriebsparameter 27 dann von den an sich bekannten Einstellmitteln dadurch erreicht wird, dass die Eingabe- und Anzeigeeinheit 33 Stellsignale 34 generiert, die mittels Datenübertragungssystem 35 an die Einstellmittel übergeben werden.

Damit die einstellbaren Betriebsparameter 27 niedrige Kornverluste 20 und zugleich an den jeweiligen Durchsatz angepasste Fahrgeschwindigkeiten v ermöglichen, verfügt der Mähdrescher 2 in an sich bekannter Weise über verschiedene Sensoreinheiten 36 die innerhalb der Arbeitsmaschine 1 sowohl erntegutspezifische als auch maschinenspezifische Parameter 27 ermitteln, die dann zur Optimierung der jeweiligen Betriebsparameter 27 herangezogen werden. Dabei umfassen die Sensoreinheiten 36 im einfachsten Fall sogenannte Kornverlustsensoren 37, die in der Regel aus dem durch den Kontakt der Körner mit den Kornverlustsensoren 37 erzeugten Körperschall Kornverlustsignale 38 generieren, die in der Eingabe- und Anzeigeeinheit 33 die wertmäßige Darstellung der Kornverluste 20 ermöglichen. Eine weitere Gruppe von Sensoreinheiten 36 bilden an sich bekannte Drehzahlsensoren 39, 40 die beispielsweise zur Ermittlung einer Dreschtrommeldrehzahl 30 sowie der Gebläsedrehzahl 31 herangezogen werden. Jeder Drehzahlsensor 39, 40 generiert Eingangssignale 41 (aus Übersichtlichkeitsgründen in Fig. 1 schematisch nur für Sensor 40 eingezeichnet) die in der Eingabe- und Anzeigeeinheit 33 zu reellen Werten für die jeweiligen Drehzahlen 30, 31 verrechnet und gegebenenfalls angezeigt werden. Damit der den Mähdrescher 2 durchlaufende Gutdurchsatz bestimmt werden kann verfügt der Mähdrescher 2 zudem über sogenannte Durchsatzsensoren 42, 43. Dabei ist einer der Durchsatzsensoren 42 im Bereich des Schrägförderers 3 in an sich bekannter Weise angeordnet, wobei der Durchsatzsensor 42 die erntegutmengenabhängige Auslenkung des umlaufenden Fördermittels 44 ermittelt und aus dieser ein Eingangssignal 45 generiert, welches in der Eingabe- und Anzeigeeinheit 33 zur Darstellung reeller Werte für den Gesamtdurchsatz an Erntegut 5 führt. Der weitere Durchsatzsensor 43 ist als an sich bekannter Kornmengensensor 43 ausgebildet und in dem zum Korntank 26 führenden Förderelevator 25 angeordnet. Das von dem Kornmengensensor 43 generierte Eingangssignal 46 führt schließlich in der Eingabe- und Anzeigeeinheit 33 zur Darstellung eines reellen Kornmengenwertes. Zudem verfügt der Mähdrescher über ein an sich bekanntes weiteres Datenaustauschsystem 47, über welches mittels der Eingabe- und Anzeigeeinheit 33 Daten zwischen dem Mähdrescher 2 und verschiedenen externen Systemen ausgetauscht werden können.

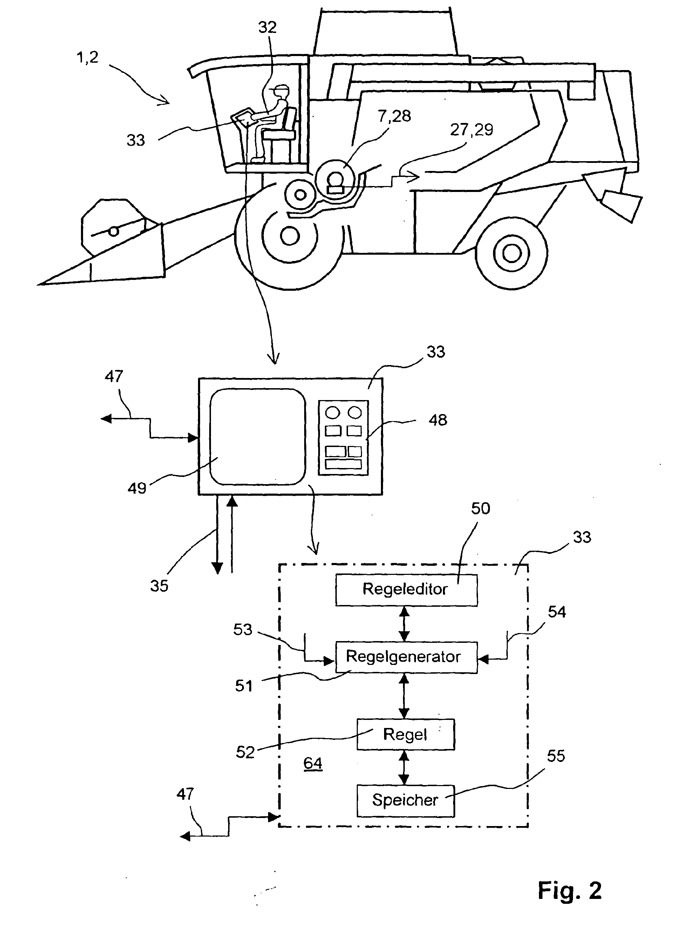

Gemäß Figur 2 verfügt die der landwirtschaftlichen Arbeitsmaschine 1 zugeordnete Eingabe- und Anzeigeeinheit 33 über ein Eingabeterminal 48 sowie ein Anzeigedisplay 49. In an sich bekannter und deshalb nicht näher beschriebenen Weise kann der Bediener 32 der landwirtschaftlichen Arbeitsmaschine 1 über das Eingabeterminal und das Datenübertragungssystem 35 verschiedene Betriebsparameter 27 der Arbeitsorgane 28 des Mähdreschers 2 abrufen und editieren. Zugleich werden dem Bediener 32 über das Anzeigedisplay 49 graphisch und/oder alphanumerisch verschiedene Betriebsparameter 27 sowie Ernteguteigenschaften und beispielsweise witterungsabhängige äußere Randbedingungen permanent oder auf Anforderung angezeigt. Erfindungsgemäß ist der Eingabe- und Anzeigeeinheit 33 ein über das Eingabeterminal 48 bedienbarer Regeleditor 50 zugeordnet, der mit einem Regelgenerator 51 in Wirkverbindung steht. Der Regelgenerator 51 wird von einem Programmmodul gebildet, welches in der Lage ist Einstellregeln 52 für die Betriebsparameter 27 der Arbeitsorgane 28 der Arbeitsmaschine 1 zu generieren. Dabei berücksichtigt der Regelgenerator 51 bei der Erstellung von Regeln 52 verschiedenste maschineninterne und maschinenexterne Parameter 53, 54. Beispielsweise können die maschineninternen Parameter 53 die Betriebsparameter 27 der Arbeitsorgane 28, die Gutart, den Gutdurchsatz 45, 46 sowie entegutspezifische Parameter wie etwa die Gutfeuchte, den Kornverlust 20 sowie den von der mechanischen Belastung des Erntegutes im Mähdrescher 2 abhängende Bruchkornanteil umfassen. Demgegenüber werden die maschinenexternen Parameter 54 maßgeblich von den äußeren Witterungsbedingungen wie Temperatur und Feuchtigkeit, der Tageszeit sowie von Wetterprognosen und geographischen Besonderheiten des Einsatzgebietes der Arbeitsmaschine bestimmt. Es sei an dieser Stelle darauf verwiesen, dass die Aufzählung der maschineninternen und maschinenexternen Parameter 53, 54 nur beispielhaft erfolgt und sich damit auch auf weitere nicht explizit erwähnte maschineninterne sowie maschinenexterne Parameter 53, 54 erstreckt. Der Regelgenerator 51 ist zudem so ausgeführt, dass er generierte Regeln 52 in einem Speichermodul 55 hinterlegen kann. Das Zusammenwirken des Regelgenerators 51 mit dem ihm zugeordneten Regeleditor 50 ist in erfindungsgemäßer Weise so gestaltet, dass der Bediener entweder unmittelbar in dem Speichermodul 55 hinterlegte Regeln 52 abrufen, hinterlegte Regeln 52 ändern oder neue Regeln 52 generieren kann, wobei diese geänderten oder neu generierten Regeln 52 wiederum in dem Speichermodul 55 abspeicherbar sind. Um das Einsatzgebiet des Regelgenerators 51 zu erhöhen, können die hinterlegten Regeln 52 auch Einstellratschlägen und Umbauanweisungen enthalten, sodass der Regelgenerator nicht nur Betriebsparameter 27 der Arbeitsorgane 28 optimiert, sondern auch Umbau- und Reparaturprozesse beschleunigt.

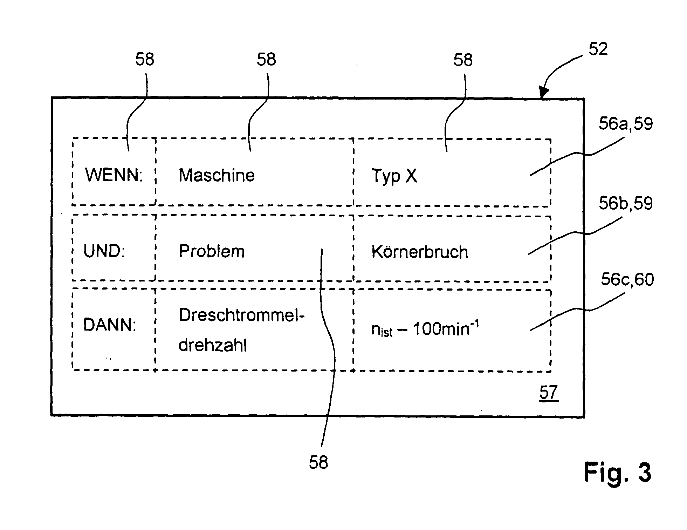

Damit die Änderung hinterlegter Regeln 52 oder die Generierung neuer Regeln 52 unabhängig von speziellen Programmierkenntnissen schnell und effizient durchgeführt werden kann sind die Regeln 52, wie in Figur 3 schematisch dargestellt, erfindungsgemäß durch natürlichsprachige Programmschritte 56a-c definiert. Es liegt im Rahmen der Erfindung, dass die natürlichsprachigen Programmschritte 56a-c auch in Form von an sich bekannten Signalflussbildern oder Entscheidungstabellen abgebildet sein können. Zur Veranschaulichung des Prinzips ist eine nur wenige Randbedingungen berücksichtigende Regel 52 dargestellt. In dem mit dem Regelgenerator 51 in Wirkverbindung stehenden Regeleditor 50 kann über das Eingabeterminal 48 von dem Bediener 32 die in Fig. 3 schematisch dargestellte Eingabemaske 57 zur Generierung einer Regel 52 aufgerufen werden. In einem ersten Programmschritt 56a wird der Typ der landwirtschaftlichen Arbeitsmaschine definiert, wobei hier ein ganz spezielles Fabrikat eines Herstellers festgelegt wird. In einem weitern Programmschritt 56b wird das aufgetretene Problem, hier Körnerbruch, bestimmt. Im letzten Programmschritt 56c wird letztlich definiert, dass bei den vorgenannten Randbedingungen die Dreschtrommeldrehzahl 29, 30 um 100 min⁻¹ reduziert wird. Die in dem Regeleditor 50 generierte Regel 52 wird letztlich in den Regelgenerator 51 übernommen und in dem vorhandenen Speichermodul 55 abgelegt. In dem dargestellten Ausführungsbeispiel berücksichtigt die generierte Regel 52 allein maschineninterne Parameter 53, nämlich den Maschinentyp und den in der Maschine mit an sich bekannten und deshalb nicht näher beschriebene Körnerbruchsensoren detektierten Körnerbruch. Allein in Abhängigkeit von diesen beiden maschineninternen Parametern 53 bestimmt die aufgezeigte Regel 52 eine relative Einstellungsangabe, nämlich die Reduzierung der momentanen Dreschtrommeldrehzahl 29, 30 um 100min⁻¹. Wie im weiteren noch näher erläutert wird, können die erfindungsgemäßen Regeln 52 eine Vielzahl von maschineninternen und maschinenexternen Parametern 53, 54 berücksichtigen und aus diesen optimierte Werte für die Betriebsparameter 27 der Arbeitsorgane 28 der Arbeitsmaschine 1 generieren.

Damit verschiedenste Bediener 32 mit dem Regeleditor 50 Regeln 52 generieren können, ist die Terminologie der Programmschritte 56a-c in sprachlichen Elementen 58 zusammengefasst die wiederum mit dem in dem Regelgenerator 51 hinterlegten Quellcode verknüpft sind. Dies stellt einerseits sicher, dass in dem Regelgenerator 51 gleiche Probleme stets gleich beschrieben werden und reduziert zudem den erforderlichen Programmier- und Speicheraufwand. Indem ferner die sprachlichen Elemente 58 an die Fachsprache des jeweiligen Gebietes, im dargestellten Ausführungsbeispiel das Gebiet landwirtschaftlicher Arbeitsmaschinen 1 und hier speziell der Mähdrescher 2 angepasst wird, ist sichergestellt, dass beliebige Bediener 32 gleiche Sachverhalte stets gleich im Regelgenerator 51 abbilden. Durch die dargestellte Verknüpfung der sprachlichen Elemente 58 mit dem Quellcode verkörpern die natürlichsprachig strukturierten Programmschritte 56a-c entweder Eingangsdaten 59 oder Ausgangsdaten 60 der jeweils generierten Regel 52. Dabei können die Eingangsdaten Betriebsparameter 27 der Arbeitsmaschine 1, Probleme beim Betreiben der Arbeitsmaschine, innere und äußere Randbedingungen und während des Betreibens der Arbeitsmaschine zu erreichende Ziele sein, während die Ausgangsdaten 60 im wesentlichen von den Sollwerten der Betriebsparametern 27 der Arbeitsorgane 28 der Arbeitsmaschine 1 gebildet werden. Es liegt im Rahmen der Erfindung das die Sollwerte der Betriebsparameter neben der dargestellten visuellen Anzeige auch akustisch widergegeben werden können. Das Generieren der Regeln 52 durch einen Betreiber 32 wird auch dadurch noch vereinfacht, dass die Regeln 52 als sogenannte "Wenn-Dann" regeln strukturiert sind, die erheblich zum besseren Verständnis der Zusammenhänge zwischen Betriebsparametern 27 und den Ernteguteigenschaften sowie der hinterlegten Programmabläufe beiträgt.

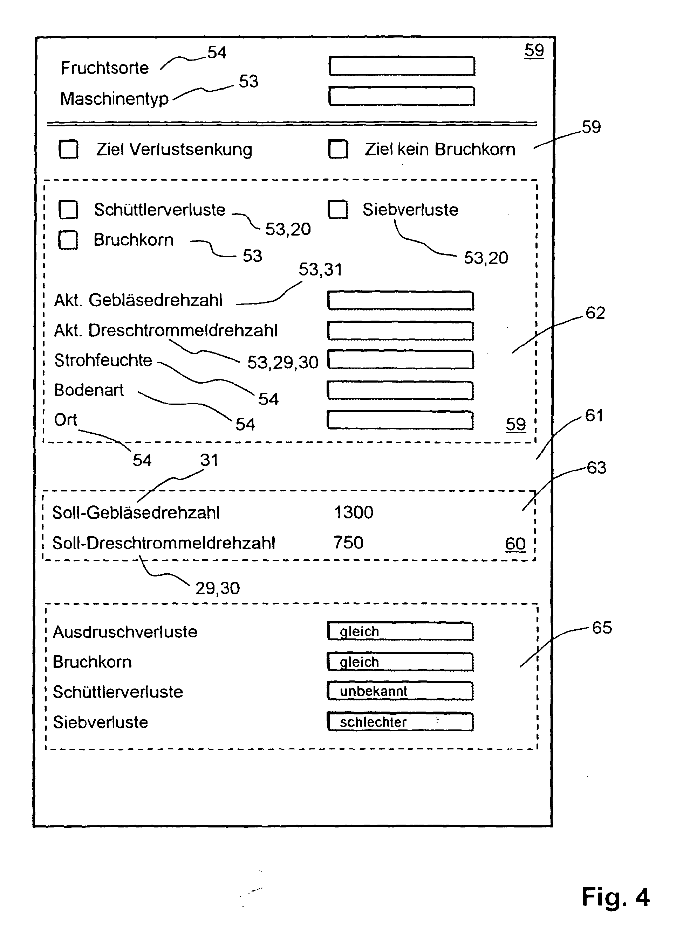

Für den Bediener 32 der allein den Regelgenerator 51 nutzen möchte ohne zugleich über den Regeleditor 50 neue Regeln 52 zu definieren, wird gemäß Figur 4 in dem Anzeigendisplay 49 eine über das Eingabeterminal 48 editierbare Maske 61 verfügbar gemacht. In der Maske 61 sind zunächst der maschinenexterne Parameter "Fruchtsorte" 54 sowie der maschineninterne Parameter "Maschinentyp" 53 zu definieren. Es liegt im Rahmen der Erfindung, dass die Parameter "Fruchtsorte" und Machinentyp" auch selbsttätig durch die Eingabe- und Anzeigeeinheit 33 generiert werden können. Sodann wählt der Bediener 32 das gewünschte Ziel, hier entweder "kein Bruchkorn" oder "Verlustsenkung" aus, wobei beide Parameter maschineninterne Parameter 53 bilden. Weiter verfügt die Maske 61 über ein Ist-Datenfeld 62 in dem die maschineninternen Parameter 53 Schüttlerverluste 20, Siebverluste 20, Bruchkorn, Gebläsedrehzahl 31, Dreschtrommeldrehzahl 29-30 sowie die maschinenexternen Daten 54 Strohfeuchte, Bodenart und geographischer Lage; in der Arbeitsmaschine 1 tätig ist editierbar sind. In an sich bekannter Weise können diese Parameter 53, 54 mittels geeigneter Sensoren 36 generiert oder händisch vom Betreiber 32 eingegeben werden. Im Ergebnisdatenfeld 63 werden schließlich die mittels der in dem Regelgenerator 51 hinterlegten Regel 52 ermittelten Ausgangsdaten 60, hier die Gebläsedrehzahl 31 sowie die Dreschtrommeldrehzahl 29-30 angezeigt. Damit die mittels des Regelgenerators 51 vorgenommene Optimierung der Betriebsparameter 27 der Arbeitsmaschine 1 von hoher Qualität ist, stehen in dem Ausführungsbeispiel nach Fig. 4 erheblich mehr Eingangsdaten 59 zur Generierung der Ausgangsdaten 60 zur Verfügung, sodass die hier angewendete Regel 52 über eine größere Anzahl natürlichsprachig strukturierter Programmschritte 56 verfügt. In einer vorteilhaften Weiterbildung kann zudem vorgesehen sein, dass die in den Ausgangsdaten 60 ermittelten optimierten Betriebsparameter 27 in an sich bekannter Weise selbsttätig an den jeweiligen Arbeitsorganen 28 eingestellt werden. Um dem Bediener 32 zudem die Möglichkeit zu geben, dass er eine Beurteilung der Änderung der Betriebsparameter 27 auf die Arbeitsqualität der Arbeitsmaschine 1 vornehmen kann, ist in der Eingabemaske 61 zudem ein Bewertungseingabefeld 65 vorgesehen. Die von dem Betreiber in dem Bewertungseingabefeld 65 vornehmbaren Bewertungen können dann bei der Generierung neuer Regeln 52 oder der Korrektur oder Anpassung vorhandener Regeln 52 berücksichtigt werden. Im einfachsten Fall wird die Bewertung gemäß Figur 4 quantitativ vorgenommen.

In einer vorteilhaften Weiterbildung der Erfindung können der Regeleditor 50, der Regelgenerator 51, die durch den Regelgenerator 51 generierten Regeln 52 und der Speicher 55 zur Hinterlegung der Regeln 52 gemäß Fig. 2 in einem Modul 64 zusammengefasst sein, wobei das Modul 64 zentral und außerhalb einer Arbeitsmaschine 1 angeordnet ist und eine oder mehrere Arbeitsmaschinen 1 mit diesem Modul 64 über ein externes Datenaustauschsystem 47 verbunden sind. Eine derartige Ausführung schafft zudem die Möglichkeit, dass die verschiedenen Arbeitsmaschinen 1 generierte Regeln 52 untereinander austauschen können.

Die Erfindung ist nicht auf das beschriebene Ausführungsbeispiel beschränkt sondern kann an beliebigen Arbeitsmaschinen eingesetzt werden, um die beschriebenen Effekte zu erzielen.

### Bezugszeichenliste

- 1: Arbeitsmaschine
- 2: Mähdrescher
- 3: Schrägförderer
- 4: Schneidwerk
- 5: Erntegut
- 6: Förderorgan
- 7: Dreschorgane
- 8: Dreschtrommel
- 9: Dreschtrommel
- 10: Dreschkorb
- 11: Gutstrom
- 12: Vorbereitungsboden
- 13: Reinigungseinrichtung
- 14: Gutstrom
- 15: Wendetrommel
- 16: Trenneinrichtung
- 17: Hordenschüttler
- 18, 18a: Gutstrom
- 19: Rücklaufboden
- 20: Kornverlust
- 21: Gebläse
- 22: Siebanordnung
- 23: Körnerstrom
- 24: Gutstrom
- 25: Förderelevator
- 26: Korntank
- 27: Betriebsparameter
- 28: Arbeitsorgane
- 29: Dreschtrommeldrehzahl
- 30: Dreschtrommeldrehzahl
- 31: Gebläsedrehzahl
- 32: Bediener
- 33: Eingabe- und Anzeigeeinheit
- 34: Stellsignal
- 35: Datenübertragungssystem
- 36: Sensoreinheit
- 37: Kornverlustsensor
- 38: Kornverlustsignal
- 39,40: Drehzahlsensor
- 41: Eingangssignal
- 42, 43: Durchsatzsensor
- 44: Fördermittel
- 45, 46: Eingangssignal
- 47: Datenaustauschsystem
- 48: Eingabeterminal
- 49: Anzeigedisplay
- 50: Regeleditor
- 51: Regelgenerator
- 52: Regel
- 53: maschineninterne Parameter
- 54: maschinenexterne Parameter
- 55: Speichermodul
- 56a-c: Programmschritte
- 57: Eingabemaske
- 58: sprachliches Element
- 59: Eingangsdaten
- 60: Ausgangsdaten
- 61: Maske
- 62: Ist-Datenfeld
- 63: Ergebnisdatenfeld
- 64: Modul
- 65: Bewertungseingabefeld
- v: Fahrgeschwindigkeit

## Patentansprüche

1. Verfahren zum Betreiben einer Arbeitsmaschine wobei zumindest ein Betriebsparameter wenigstens eines Arbeitsorgans der Arbeitsmaschine einstellbar ist,
wobei
der Arbeitsmaschine (1, 2) zur Veränderung des zumindest einen Betriebsparameters (27) ein mit einem Regeleditor (50) gekoppelter Regelgenerator (51) zugeordnet ist, wobei in dem Regelgenerator (51) Regeln (52) hinterlegt sind die mittels des Regeleditors (50) änderbar sind **dadurch gekennzeichnet, dass** die Regeln (52) des Regelgenerators (51) durch natürlichsprachige Programmschritte (56a-c) definiert sind.

2. Verfahren zum Betreiben einer Arbeitsmaschine nach einem der vorhergehenden Ansprüche,
**dadurch gekennzeichnet,**
**dass** die Terminologie der natürlichsprachigen Programmschritte (56a-c) in sprachlichen Elementen (58) hinterlegt ist.

3. Verfahren zum Betreiben einer Arbeitsmaschine nach Anspruch 3,
**dadurch gekennzeichnet,**
**dass** die sprachlichen Elemente (58) mit in dem Regelgenerator (51) hinterlegten Quellcode verknüpft sind.

4. Verfahren zum Betreiben einer Arbeitsmaschine nach einem der vorhergehenden Ansprüche,
**dadurch gekennzeichnet,**
**dass** die sprachlichen Elemente (58) sowohl Eingangsdaten (59) als auch Ausgangsdaten (60) für die einzustellenden Betriebsparameter (27) bilden, die in dem Regeleditor (50) unmittelbar zur Generierung der jeweiligen Regel (52) führen.

5. Verfahren zum Betreiben einer Arbeitsmaschine nach einem der vorhergehenden Ansprüche,
**dadurch gekennzeichnet,**
**dass** die Eingangsdaten (59) Betriebsparameter (27) der Arbeitsmaschine (1, 2), Probleme beim Betreiben der Arbeitsmaschine (1, 2), innere und äußere Randbedingungen und während des Betreibens der Arbeitsmaschine (1, 2) zu erreichende Ziele sein können.

6. Verfahren zum Betreiben einer Arbeitsmaschine nach einem der vorhergehenden Ansprüche,
**dadurch gekennzeichnet,**
**dass** die Ausgangsdaten (60) die einstellbaren Betriebsparameter (27) der Arbeitsmaschine (1, 2) sind.

7. Verfahren zum Betreiben einer Arbeitsmaschine nach einem der vorhergehenden Ansprüche,
**dadurch gekennzeichnet,**
**dass** die im Regelgenerator (51) editierbar hinterlegte Regel (52) einen optimierten Sollwert des wenigstens einen Betriebsparameters (27) generiert und der Sollwert natürlichsprachig ausgegeben wird.

8. Verfahren zum Betreiben einer Arbeitsmaschine nach Anspruch 8,
**dadurch gekennzeichnet,**
**dass** die Ausgabe des optimierten Sollwertes des Betriebsparameters (27) visuell und/oder akustisch erfolgt.

9. Verfahren zum Betreiben einer Arbeitsmaschine nach einem der vorhergehenden Ansprüche,
**dadurch gekennzeichnet,**
**dass** die Regeln (52) als "Wenn - Dann" - Regeln und/oder Entscheidungstabellen und/oder Flussdiagramme strukturiert sind.

10. Verfahren zum Betreiben einer Arbeitsmaschine nach einem der vorhergehenden Ansprüche,
**dadurch gekennzeichnet,**
**dass** der mit einem Regeleditor (50) gekoppelte Regelgenerator (51) und der die Regeln (52) abspeichernde Speichermodul (55) in einem Modul (64) zusammengefasst sind und das der Modul (64) zentral angeordnet ist und die Arbeitsmaschine (1, 2) über ein Datenaustauschsystem (47) mit dem Modul (64) verbunden ist.

11. Verfahren zum Betreiben einer Arbeitsmaschine nach einem der vorhergehenden Ansprüche,
**dadurch gekennzeichnet,**
**dass** die generierten Regeln (52) unter einer Vielzahl von Arbeitsmaschinen (1, 2) austauschbar sind.

12. Verfahren zum Betreiben einer Arbeitsmaschine nach einem der vorhergehenden Ansprüche,
**dadurch gekennzeichnet,**
**dass** eine Vielzahl von Arbeitsmaschinen (1, 2) mit dem Modul (64) verbunden sind und die Arbeitsmaschinen (1, 2) generierte Regeln (52) austauschen können.

13. Verfahren zum Betreiben einer Arbeitsmaschine nach einem der vorhergehenden Ansprüche,
**dadurch gekennzeichnet,**
**dass** die in den Regeln (52) definierten natürlichsprachigen Programmschritte (56) Einstellratschläge oder Montageanleitungen umfassen können.

14. Verfahren zum Betreiben einer Arbeitsmaschine nach einem der vorhergehenden Ansprüche,
**dadurch gekennzeichnet,**
**dass** die ermittelten Betriebsparameter (27) selbsttätig an den jeweiligen Arbeitsorganen (28) eingestellt werden.

15. Verfahren zum Betreiben einer Arbeitsmaschine nach einem der vorhergehenden Ansprüche,
**dadurch gekennzeichnet,**
**dass** der Bediener (32) eine qualitative Bewertung (65) der optimierten einstellbaren Betriebsparameter (27) vornehmen kann.

16. Vorrichtung zum Betreiben einer Arbeitsmaschine wobei zumindest ein Betriebsparameter wenigstens eines Arbeitsorgans der Arbeitsmaschine einstellbar ist,
wobei
die zumindest eine Arbeitsmaschine (1, 2) eine Eingabe- und Anzeigeeinheit (33) zur Generierung von Datensätzen aufweist und die Eingabe- und Anzeigeeinheit (33) mit einem einen Regeleditor (50) umfassenden Regelgenerator (51) verbunden ist in dem Regeln (52) für die Einstellung von Betriebsparametern (27) von Arbeitsorganen (28) der Arbeitsmaschine (1, 2) hinterlegt und editierbar sind, **dadurch gekennzeichnet, dass** die mittels des Regeleditors (51) änderbaren Regeln (52) durch natürlichsprachige Programmschritte (56a-c) definiert sind.

17. Vorrichtung zum Betreiben einer Arbeitsmaschine nach Anspruch 16,
**dadurch gekennzeichnet,**
**dass** die Arbeitsmaschine (1) eine landwirtschaftliche Arbeitsmaschine (2) ist.

## Claims

1. A method of operating a working machine, wherein at least one operating parameter of at least one working member of the working machine is adjustable, wherein a rule generator (51) coupled to a rule editor (50) is associated with the working machine (1, 2) for altering the at least one operating parameter (27), wherein specified in the rule generator (51) are rules (52) which can be altered by means of the rule editor (50), **characterised in that** the rules (52) of the rule generator (51) are defined by natural-speech program steps (56a-c).

2. A method of operating a working machine according to claim 1 **characterised in that** the terminology of the natural-speech program steps (56a-c) is deposited in speech elements (58).

3. A method of operating a working machine according to claim 2 **characterised in that** the speech elements (58) are linked to source code deposited in the rule generator (51).

4. A method of operating a working machine according to one of the preceding claims **characterised in that** the speech elements (58) form both input data (59) and also output data (60) for the operating parameters (27) to be adjusted, which in the rule editor (50) lead directly to the generation of the respective rule (52).

5. A method of operating a working machine according to one of the preceding claims **characterised in that** the input data (59) can be operating parameters (27) of the working machine (1, 2), problems in operation of the working machine (1,2), internal and external boundary conditions and aims to be achieved during operation of the working machine (1, 2).

6. A method of operating a working machine according to one of the preceding claims **characterised in that** the output data (60) are the adjustable operating parameters (27) of the working machine (1, 2).

7. A method of operating a working machine according to one of the preceding claims **characterised in that** the rule (52) which is stored editably in the rule generator (51) generates an optimised target value of the at least one operating parameter and the target value is outputted in natural speech.

8. A method of operating a working machine according to claim 7 **characterised in that** output of the optimised target value of the operating parameter (27) is effected visually and/or acoustically.

9. A method of operating a working machine according to one of the preceding claims **characterised in that** the rules (52) are structured as 'if - then' - rules and/or decision tables and/or flow charts.

10. A method of operating a working machine according to one of the preceding claims **characterised in that** the rule generator (51) coupled to a rule editor (50) and the storage module (55) storing the rules (52) are combined in a module (64) and the module (64) is arranged centrally and the working machine (1, 2) is connected to the module (64) by way of a data exchange system (47).

11. A method of operating a working machine according to one of the preceding claims **characterised in that** the generated rules (52) can be exchanged among a multiplicity of working machines (1, 2).

12. A method of operating a working machine according to one of the preceding claims **characterised in that** a multiplicity of working machines (1, 2) are connected to the module (64) and the working machines (1, 2) can exchange generated rules (52).

13. A method of operating a working machine according to one of the preceding claims **characterised in that** the natural-speech program steps (56) defined in the rules (52) can include adjustment advices' or mounting instructions.

14. A method of operating a working machine according to one of the preceding claims **characterised in that** the ascertained operating parameters (27) are automatically set at the respective working members (28).

15. A method of operating a working machine according to one of the preceding claims **characterised in that** the operator (32) can perform a qualitative assessment (65) of the optimised adjustable operating parameters (27).

16. Apparatus for operating a working machine wherein at least one operating parameter of at least one working member of the working machine is adjustable, wherein the at least one working machine (1, 2) has an input and display unit (33) for generating data sets and the input and display unit (33) is connected to a rule generator (51) which includes a rule editor (50) and in which rules (52) are deposited for adjusting operating parameters (27) of working members (28) of the working machine (1, 2) and are editable, **characterised in that** the rules (52) which can be altered by means of the rule editor (51) are defined by natural-speech program steps (56a-c).

17. Apparatus for operating a working machine according to claim 16 **characterised in that** the working machine (1) is an agricultural working machine (2).

## Revendications

1. Procédé pour faire fonctionner un engin de travail, dans lequel on peut ajuster au moins un paramètre de fonctionnement d'au moins un organe de travail de l'engin de travail, dans lequel un générateur de règles (51) couplé à un éditeur de règles (50) est affecté à l'engin de travail (1,2) pour modifier le au moins un paramètre de fonctionnement (27), dans lequel sont enregistrées dans le générateur de règles (51) des règles (52) qui sont modifiables à l'aide de l'éditeur de règles (50), **caractérisé en ce que** les règles (52) du générateur de règles (51) sont définies par des étapes de programme en langage naturel (56a à c).

2. Procédé pour faire fonctionner un engin de travail selon la revendication 1, **caractérisé en ce que** la terminologie des étapes de programme en langage naturel (56a à c) est enregistrée dans des éléments linguistiques (58).

3. Procédé pour faire fonctionner un engin de travail selon la revendication 2, **caractérisé en ce que** les éléments linguistiques (58) sont combinés avec des codes source enregistrés dans le générateur de règles (51).

4. Procédé pour faire fonctionner un engin de travail selon l'une quelconque des revendications précédentes, **caractérisé en ce que** les éléments linguistiques (58) constituent autant des données d'entrée (59) que des données de sortie (60) pour les paramètres de fonctionnement (27) à ajuster, qui conduisent dans l'éditeur de règles (50) directement à la génération de la règle respective (52).

5. Procédé pour faire fonctionner un engin de travail selon l'une quelconque des revendications précédentes, **caractérisé en ce que** les données d'entrée (59) peuvent être des paramètres de fonctionnement (27) de l'engin de travail (1, 2), des problèmes lors du fonctionnement de l'engin de travail (1, 2), des conditions marginales internes et externes et des objectifs à atteindre pendant le fonctionnement de l'engin de travail (1, 2).

6. Procédé pour faire fonctionner un engin de travail selon l'une quelconque des revendications précédentes, **caractérisé en ce que** les données de départ (60) sont les paramètres de fonctionnement ajustables (27) de l'engin de travail (1, 2).

7. Procédé pour faire fonctionner un engin de travail selon l'une quelconque des revendications précédentes, **caractérisé en ce que** la règle (52) enregistrée de manière éditable dans le générateur de règles (51) génère une valeur théorique optimisée du au moins un paramètre de fonctionnement (27) et la valeur théorique est éditée en langage naturel.

8. Procédé pour faire fonctionner un engin de travail selon la revendication 7, **caractérisé en ce que** l'édition de la valeur théorique optimisée du paramètre de fonctionnement (27) se fait en mode visuel et/ou en mode acoustique.

9. Procédé pour faire fonctionner un engin de travail selon l'une quelconque des revendications précédentes, **caractérisé en ce que** les règles (52) sont structurées en règles "si - alors" et/ou en tables de décision et/ou en organigrammes.

10. Procédé pour faire fonctionner un engin de travail selon l'une quelconque des revendications précédentes, **caractérisé en ce que** le générateur de règles (51) couplé à un éditeur de règles (50) et le module de mémoire (55) mémorisant les règles (52) sont rassemblés dans un module (64) et **en ce que** le module (64) est agencé au centre et l'engin de travail (1, 2) est connecté au module (24) via un système d'échange de données (47).

11. Procédé pour faire fonctionner un engin de travail selon l'une quelconque des revendications précédentes, **caractérisé en ce que** les règles générées (52) sont interchangeables dans une pluralité d'engins de travail (1, 2).

12. Procédé pour faire fonctionner un engin de travail selon l'une quelconque des revendications précédentes, **caractérisé en ce qu'**une pluralité d'engins de travail (1, 2) est connectée au module (64) et les engins de travail (1, 2) peuvent échanger des règles générées (52).

13. Procédé pour faire fonctionner un engin de travail selon l'une quelconque des revendications précédentes, **caractérisé en ce que** les étapes de programme (56) en langage naturel définies dans les règles (52) peuvent englober des conseils d'ajustement ou des directives de montage.

14. Procédé pour faire fonctionner un engin de travail selon l'une quelconque des revendications précédentes, **caractérisé en ce que** les paramètres de fonctionnement déterminés (27) sont ajustés automatiquement sur les organes de travail respectifs (28).

15. Procédé pour faire fonctionner un engin de travail selon l'une quelconque des revendications précédentes, **caractérisé en ce que** l'utilisateur (32) peut effectuer une évaluation qualitative (65) des paramètres de fonctionnement ajustables optimisés (27).

16. Dispositif pour faire fonctionner un engin de travail, dans lequel au moins un paramètre de fonctionnement d'au moins un organe de travail de l'engin de travail est ajustable, dans lequel le au moins un engin de travail (1, 2) présente une unité de saisie et d'affichage (33) pour générer des jeux de données et l'unité de saisie et d'affichage (33) est connectée à un générateur de règles (51) comprenant un éditeur de règles (50), dans lequel générateur de règles des règles (52) sont enregistrées pour ajuster des paramètres de fonctionnement (27) d'organes de travail (28) de l'engin de travail (1, 2) et sont éditables, **caractérisé en ce que** les règles (52) modifiables à l'aide de l'éditeur de règles (51) sont définies par des étapes de programme (56a à c) en langage naturel.

17. Dispositif pour faire fonctionner un engin de travail selon la revendication 16, **caractérisé en ce que** l'engin de travail (1) est un engin de travail agricole (2).
